Europäisches Patentamt

European Patent Office

Office européen des brevets

(11) Numéro de publication: **0 159 052**
**A2**

## (12) DEMANDE DE BREVET EUROPEEN

(21) Numéro de dépôt: **85200299.7**

(22) Date de dépôt: **01.03.85**

(51) Int. Cl.⁴: **B 62 K 1/00**
**A 63 G 19/02**

(30) Priorité: **20.04.84 BE 212800**

(43) Date de publication de la demande:
**23.10.85 Bulletin 85/43**

(84) Etats contractants désignés:
**AT CH DE FR GB IT LI LU NL SE**

(71) Demandeur: **ENTREPRISES ROBERT DELBRASSINNE**
**rue Cardinal Mercier, 2**
**B-6100 Mont-sur-Marchienne(BE)**

(72) Inventeur: **Delbrassinne, Robert**
**rue Cardinal Mercier 2**
**B-6100 Mont-sur-Machienne(BE)**

(74) Mandataire: **Thirion, Robert et al,**
**Bureau GEVERS S.A. 7, rue de Livourne Bte 1**
**B-1050 Bruxelles(BE)**

(54) Véhicule sphérique pour le transport, en particulier pour le transport de personnes dans des parcs d'attractions.

(57) Véhicule comprenant une carcasse ajourée rigide et indéformable (1) dont les éléments (2) ont leurs faces externes (3), formant la surface de roulement, situées sur une premiére sphère de trace (4) et leurs faces internes (5) sur une seconde sphère de trace (6) comprise dans la première, un habitacle (7), en forme de segment sphérique et concentrique à la sphère (6), pour au moins un passager et pourvu de moyens (8) prenant appui sur une partie des faces internes (5) pour guider l'habitacle (7) afin qu'il se déplace librement par rapport à la carcasse quand elle tourne autour du centre de la sphère (4) et des moyens prévus sur la carcasse pour permettre l'accès à l'habitable (7).

FIG. 4

"Véhicule sphérique pour le transport, en particulier
pour le transport de personnes dans des parcs d'attractions".

La présente invention a pour objet un véhicule
sphérique de transport, en particulier véhicule pour
le transport de personnes dans des parcs d'attractions.

On connaît quelques véhicules sphériques qui, en
majorité, sont utilisés comme jouets et mus, sur le sol
ou sur l'eau, par la force musculaire d'un occupant logé
à l'intérieur d'une enveloppe sphérique, à la façon d'une
tournette (cage tournante pour écureuil).

On a également imaginé, en se basant sur ces
réalisations, de construire des véhicules, pour un ou
plusieurs passagers, destinés à se déplacer soit par
gravité sur un chemin de roulement, soit sous l'action
d'un engin motorisé logé à l'intérieur d'une enveloppe
sphérique.

Certains de ces véhicules, dont l'enveloppe sphérique
a été prévue transparente pour assurer une visibilité
aux passagers, présentent l'inconvénient majeur de ne
pouvoir être exploités du fait que l'on ne connaît
actuellement aucun matériau transparent, utilisable
pour la réalisation de ce type d'engin, qui ne serait
immédiatement rendu totalement opaque par des rayures
provoquées, sur la face externe de l'enveloppe, par le
roulement de cette dernière et par des rayures provoquées
sur la face interne de ladite enveloppe par les moyens

2    0159052

supportant les passagers et par les engins motorisés assurant le mouvement des véhicules. De plus, il serait très difficile, voir impossible, à partir des matériaux transparents connus et utilisables dans ce genre d'application, de réaliser une enveloppe sphérique suffisamment résistante pour assurer la sécurité du ou des passagers.

L'invention a pour but de remédier à ces inconvénients et de procurer un véhicule d'allure sphérique réellement conçu pour le transport de charges, en particulier d'un ou de plusieurs passagers, capable d'évoluer, sur terre ou dans l'eau, soit sur un chemin prédéterminé, par gravité ou entraîné par des moyens moteurs, soit librement et piloté par un des passagers , en version motorisée ou non, ce véhicule offrant aux passagers une bonne visibilité ainsi qu'une excellente protection.

A cet effet, suivant l'invention, ledit véhicule comprend une carcasse rigide et indéformable régulièrement ajourée, dont les éléments ont leurs faces externes, destinées à constituer la surface de roulement du véhicule, qui sont situées à la surface d'une première sphère tandis que les faces internes de ces éléments sont situées à la surface d'une seconde sphère, elle-même comprise dans la première, un habitacle, sensiblement en forme de segment sphérique, prévu pour supporter une charge telle qu'au moins un passager, concentrique à la seconde sphère susdite, cet habitacle ayant son centre de gravité décalé par rapport aux centres des sphères susdites et présentant des moyens agencés pour prendre appui sur une partie des faces internes des éléments de la carcasse afin que ledit habitacle soit guidé par ces

0159052

3

faces internes et se déplace librement par rapport à la carcasse lorsque celle-ci tourne autour du centre de la première sphère précitée et des moyens présentés par la carcasse et agencés pour permettre d'accéder à l'intérieur de cette dernière et à l'habitacle, les évidements égaux subsistant entre les éléments de la carcasse étant des prismes dont les bases ont la forme de triangles sphériques isocèles, les éléments susdits étant disposés pour que ces évidements soient groupés par séries de cinq et pour que, dans chaque série, les bases triangulaires des évidements soient opposées par leurs sommets pour être comprises dans un pentagone sphérique régulier.

Suivant un mode de réalisation avantageux de l'invention, chacun des évidements susdits est obturé par un panneau réalisé en un matériau transparent, les panneaux étant réunis, le long de leurs bords, aux éléments de la carcasse de manière à être situés à l'intérieur d'un volume compris entre les surfaces des première et seconde sphères précitées.

Suivant une forme de réalisation particulièrement avantageuse de l'invention, les faces externes des éléments de la carcasse sont garnies, sur au moins une partie de leur largeur, d'une couche de matériau formant bandage de roulement du véhicule et qui est capable de se déformer sous le poids de ce dernier. le matériau constituant la couche susdite étant avantageusement choisi pour que sa déformation, sous le poids du véhicule, soit sensiblement égale à la flèche du segment sphérique constitué par chacun des triangles sphériques formant les bases des prismes susdits et qui sont situés sur la première sphère précitée.

D'autres détails et particularités de l'invention ressortiront de la description des dessins annexés au présent mémoire et qui représentent, à titre d'exemples non limitatifs, des formes de réalisation particulières du véhicule suivant l'invention.

La figure 1 est une vue schématique, en perspective, montrant la carcasse rigide et indéformable du véhicule.

La figure 2 est une vue, avec brisures partielles, analogue à la figure 1 et montre les moyens agencés dans la carcasse susdite pour permettre d'accéder à l'intérieur de celle-ci.

La figure 3 est une section, suivant la ligne III-III, illustrant une forme de réalisation de la carcasse susdite.

La figure 4 est une vue schématique, partiellement en coupe, montrant le véhicule suivant l'invention dans une de ses versions non motorisées.

La figure 5 est une vue analogue à la figure 4 et montre le véhicule pourvu d'un groupe moteur assurant sa propulsion et de moyens permettant son pilotage.

La figure 6 est une vue en élévation, à plus grande échelle que celle de la figure 5 et avec brisures partielles, montrant des détails du groupe moteur susdit.

La figure 7 est une vue en plan correspondant à la figure 6.

La figure 8 est une vue en plan, partiellement en coupe, montrant des détails de montage du groupe moteur et des moyens de commande de ce dernier permettant d'assurer le pilotage du véhicule.

Les figures 9 et 10 sont des vues suivant les lignes IX-IX et X-X de la figure 8.

La figure 11 est une vue schématique analogue à la figure 5 et montre une variante du véhicule illustré à ladite figure 5.

La figure 12 est une vue en coupe, avec brisures partielles, suivant la ligne XII-XII de la figure 11.

La figure 13 est une vue partielle en coupe illustrant l'assemblage des deux hémisphères constituant la carcasse susdite.

Les figures 14 et 15 sont des vues analogues aux figures 12 et 13 et montrent une variante du véhicule illustrée par ces dernières.

Dans les différentes figures, les mêmes notations de référence désignent des éléments identiques ou analogues.

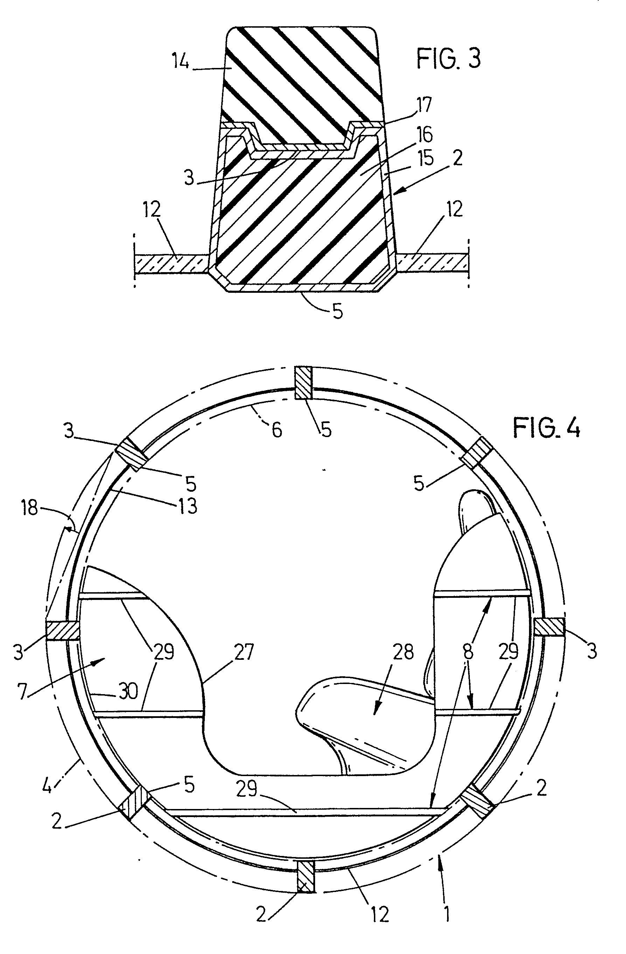

Le véhicule, suivant l'invention et illustré aux dessins, comprend,dans toutes ses versions, une carcasse 1 qui constitue la coque et le système de roulement du véhicule et qui est, d'une part, rigide et indéformable et,d'autre part, régulièrement ajourée. Les éléments 2 de cette carcasse ont leurs faces externes 3, qui constituent la surface de roulement du véhicule, qui sont situées à la surface d'une première sphère, de trace 4 (voir figure 4), tandis que leurs faces internes 5 sont situés à la surface d'une seconde sphère, de trace 6, comprise dans la première. Pour supporter la charge du véhicule, celui-ci comprend un habitacle 7, sensiblement en forme de segment sphérique,qui est concentrique à la seconde sphère de trace 6. Cet habitacle 7, dont le centre de gravité est décalé par rapport aux centres des sphères précitées, comprend des moyens 8 qui prennent appui sur une partie des faces internes 5 des éléments 2 de la carcasse 1 et qui sont agencés pour que l'habitacle soit guidé par ces faces 5 et se déplace librement par rapport à la carcasse, afin de conserver une position stable à la partie inférieure de ladite carcasse lorsque celle-ci tourne autour du centre de la sphère de trace 4. Des moyens 9 sont prévus sur la carcasse et agencés pour autoriser l'accès à l'intérieur de cette dernière et à l'habitacle 7.

Les sphères de traces 4 et 6 seront normalement concentriques, mais on pourrait, pour provoquer, lorsque le véhicule roule, le mouvement alternatif de l'habitacle 7 suivant une direction verticale, prévoir de décaler les centres des sphères susdites.

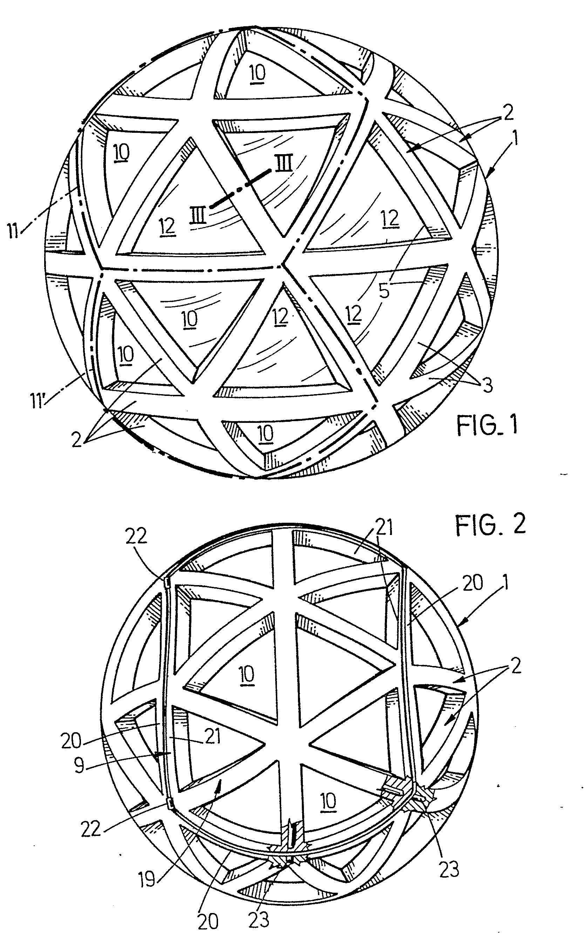

Les évidements 10 qui subsistent entre les éléments 2 de la carcasse permettent aux passagers d'avoir une très bonne visibilité. Ces évidements, qui sont sensiblement égaux, sont des prismes dont les bases ont la forme de triangles sphériques isocèles. Les éléments 2 sont disposés pour que ces évidements 10 soient groupés par séries de cinq et pour que, dans chaque série, les bases triangulaires des évidements soient opposées par leurs sommets pour être comprises dans un pentagone sphérique régulier, de trace 11, 11'... (voir figure 1).

Ces évidements 10 peuvent soit être laissés libres, soit obturés par des panneaux 12 réalisés en un matériau transparent. Ces panneaux 12 sont réunis, le long de leurs bords, aux éléments 2 de la carcasse de manière à être situés entièrement à l'intérieur d'un volume compris entre les surfaces des sphères de traces 4 et 6, de sorte que ces panneaux 12 ne puissent être rayés ni lors du roulement de la carcasse, ni lors du mouvement de l'habitacle 7 à l'intérieur de cette dernière, ni par les moyens moteurs du véhicule qui coopèrent avec les faces internes 5 desdits éléments et qui seront décrits ci-après. Dans le cas où le véhicule est destiné à être immergé, les panneaux 12 seront réunis aux éléments 2 de manière étanche, les moyens 9 susdits autorisant l'accès des passagers à l'habitacle 7 étant également agencés pour assurer l'étanchéité du véhicule. Les panneaux 12 sont avantageusement profilés suivant une troisième sphère, de trace 13, qui est concentrique à la sphère de trace 4.

Pour assurer au véhicule un déplacement sans heurts, les faces externes 3 des éléments 2 de la carcasse 1 sont avantageusement garnies, sur au moins une partie de leur largeur, d'un bandage 14 (figure 3) capable de se déformer sous le poids du véhicule. Ce bandage 14 peut être plein et continu pour garnir toutes les faces 3 susdites ou encore être constitué de bandages gonflables séparés garnissant chacun des éléments 2 de la carcasse. Dans la forme de réalisation de cette dernière illustrée à la figure 3, les éléments 2 sont constitués d'une gaine rigide 15, réalisée en matière plastique, telle que du polyester, renforcée de fibres, telles que fibres de verre, ladite gaine étant remplie d'une mousse 16 en matière plastique extrudée à cellules fermées. La gaine 15, sur sa face correspondant à la face externe 3 des éléments 2, est profilée de manière concave pour recevoir et maintenir un profilé 17 semi rigide vulcanisé au bandage 14 qui est plein et élastique. La nature et les caractéristiques d'élasticité du bandage 14 sont choisis pour que la déformation de ce dernier, sous le poids du véhicule et de son chargement, soit sensiblement égale à la flèche 18 (figure 4) du segment sphérique constitué par chacun des triangles sphériques formant les bases des prismes susdits et qui sont situés sur la sphère de trace 4.

Les moyens 9 précités permettant d'accéder à l'habitacle 7 sont constitués par une porte 19 (figure 2) pratiquée dans la carcasse 1. Le dormant de cette porte est formé par une partie externe 20 d'une série d'éléments 2 disposés suivant un polygone convexe , dans la forme de réalisation illustrée à la figure 2, tandis que l'ouvrant de la porte est formé par la partie interne 21 de ces mêmes éléments 2. Des charnières 22 réunissent l'ouvrant au dormant le long d'un des côtés du polygone susdit et des moyens de fermeture de la porte, non représentés et accessibles de l'intérieur du véhicule comme de l'extérieur, sont prévus pour immobiliser la porte en position de fermeture, ces moyens comportant avantageusement des ancrages multiples 23, du type fermeture de coffre-fort.

Suivant l'invention, le véhicule peut être équipé d'un habitacle 7 comportant des moyens, non représentés, agencés pour prendre appui sur la face interne 5 d'au moins un élément 2 de la carcasse afin d'immobiliser temporairement l'habitacle par rapport à celle-ci de manière à ce que les passagers du véhicule puissent effectuer les mêmes révolutions que ladite carcasse. Cette solution sera surtout utilisée pour les véhicules non motorisés, qui circulent soit sur un chemin déterminé par des rails de guidage, soit librement par gravité sur une surface en pente, et permettra de procurer sans danger aux passagers, retenus dans l'habitacle par des harnais de sécurité, des sensations fortes. Ces moyens peuvent être avantageusement constitués par une barre d'appui profilée et d'une longueur telle qu'elle prend appui, quelle que soit la position de l'habitacle 7 par rapport à la carcasse 1, sur la face interne 5 de deux éléments 2 voisins. Cette barre peut être appliquée sur lesdits éléments soit manuellement par les passagers à partir de l'habitacle, soit de l'extérieur, grâce à un système électrique, tel qu'un électro-aimant, actionné par télécommande.

Le véhicule suivant l'invention comprend avantageusement, quelle que soit sa version (motorisée ou non) et pour autant qu'il n'évolue pas sur des rails de guidage, des moyens 24 qui seront décrits ci-après et qui sont agencés sur l'habitacle 7 de manière à permettre la modification de la direction de déplacement du véhicule.

Lorsqu'il est motorisé, le véhicule a ses moyens moteurs 25 qui sont agencés sur l'habitacle 7 et qui sont destinés à coopérer avec les faces internes 5 des éléments 2 de la carcasse 1 pour entraîner celle-ci en rotation autour du centre de la sphère de trace 4. Le poids de l'habitacle 7 sous charge, le poids de la carcasse 1 et la puissance des moyens moteurs 25 sont choisis pour qu'un couple moteur puisse être créé pour entraîner ladite carcasse 1 à la manière d'une tournette. Les moyens 24 précités permettant la modification de la direction de déplacement du véhicule sont avantageusement agencés, lorsque ce dernier est motorisé, pour permettre également l'inversion du sens de déplacement dudit véhicule. Enfin, dans les versions du véhicule motorisées ou non, celui-ci comprend avantageusement des moyens de freinage 26 associés à l'habitacle 7 et agencés, comme décrit ci-après, pour permettre de réduire la vitesse de rotation de la carcasse 1 du véhicule et d'assurer l'arrêt de cette dernière.

Dans le véhicule illustré à la figure 4 et qui n'est pas motorisé, la hateur de l'habitacle 7 est supérieure au rayon de la sphère précitée de trace 6 et cet habitacle présente deux évidements opposés 27 pour faciliter l'accès aux sièges 28 fixés dans l'habitacle, par la porte 19 ménagée dans la carcasse 1. Les moyens 8 susdits assurant le guidage de l'habitacle dans ladite carcasse et sa liberté par rapport à cette dernière sont constitués par des anneaux et segments d'anneaux sphériques horizontaux 29 régulièrement espacés les uns des autres à la surface extérieure 30 de l'habitacle et prenant appui sur les faces internes 5 d'un nombre important d'éléments 2 de la carcasse 1, ces anneaux et segments 29 étant réalisés en un matériau à faible coefficient de frottement.

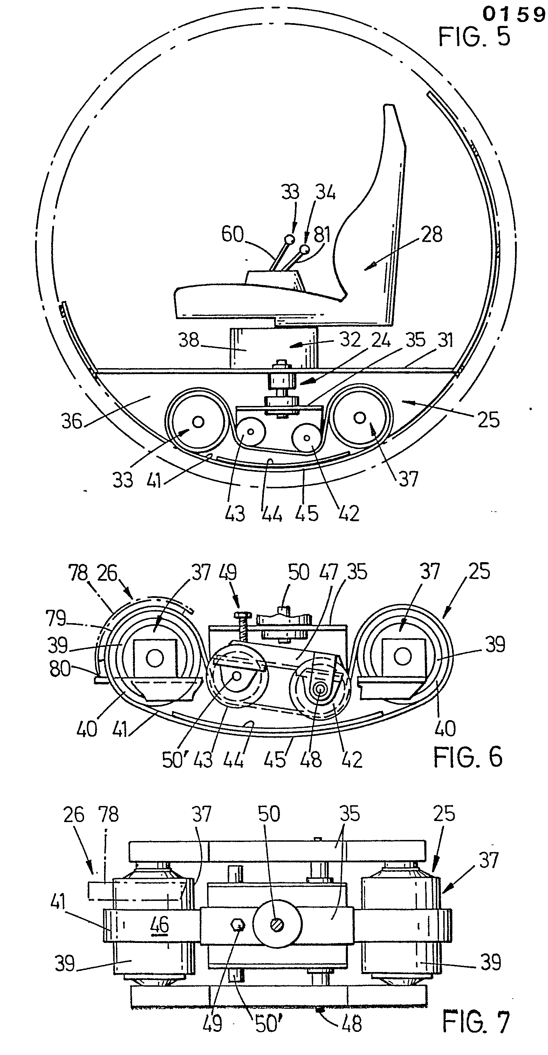

Dans le véhicule illustré à la figure 5 et qui est une variante motorisée du véhicule montré à la figure 4, l'habitacle 7 comprend, à sa base, en plancher horizontal 31 sur lequel reposent le ou les sièges 28 des passagers, la source d'alimentation 32 des moyens moteurs 25 et les moyens 33 permettant de diriger le véhicule ainsi qu'éventuellement des moyens 34 permettant de freiner ou d'arrêter la course de celui-ci, les moyens moteurs 25 étant situés en dessous du plancher 31 et associés à ce dernier.

Lesdits moyens moteurs 25 sont supportés par un châssis 35, parallèle au plancher 31 et agencé, en dessous de ce dernier, dans un logement 36 prévu dans l'habitacle 7. Ces moyens 25 comprennent deux moteurs électriques 37, d'axes parallèles, alimentés par des batteries 38 supportées par le plancher 31. Les moteurs 37 sont des moteurs freins à courant continu, dont le rotor 39 tourne autour du stator. Les rotors 39 de ces moteurs sont garnis chacun d'un bandage 40 et une courroie sans fin 41 est tendue,par des poulies de renvoi et de tension 42 et 43 dont les axes sont parallèles à ceux du moteur 37, sur ces bandages 40. (voir figure 6). Les moyens 25 comprennent également une plaque de guidage 44, fixée au châssis 35, sur laquelle passe la courroie sans fin 41 et qui est profilée pour être concentrique à la sphère de trace 6. Les moteurs 37, la courroie 41 et la plaque de guidage 44 sont agencés pour que la zone 45 de la courroie coopérant avec ladite plaque 44 prenne appui sur les faces internes 5 d'au moins deux éléments 2 de la carcasse et pour que cette zone 45 soit maintenue en contact avec ces faces 5 par la plaque de guidage 44. La face 46 de la courroie sans fin 41 est réalisée en un matériau à haut coefficient de frottement. Les poulies 42 et 43 sont montées dans un berceau oscillant 47 associé au châssis 35 par l'intermédiaire de l'arbre 48 de la poulie de renvoi 42 qui est supporté dans des paliers agencés dans ce châssis. La tension de la courroie sans fin 41 est réalisée grâce à une vis de pression 49, portée par le châssis 35, qui prend appui sur le berceau 47 pour faire pivoter celui-ci, ainsi que l'arbre 50' de la poulie de tension 43, autour de l'axe de l'arbre 48.

0159052

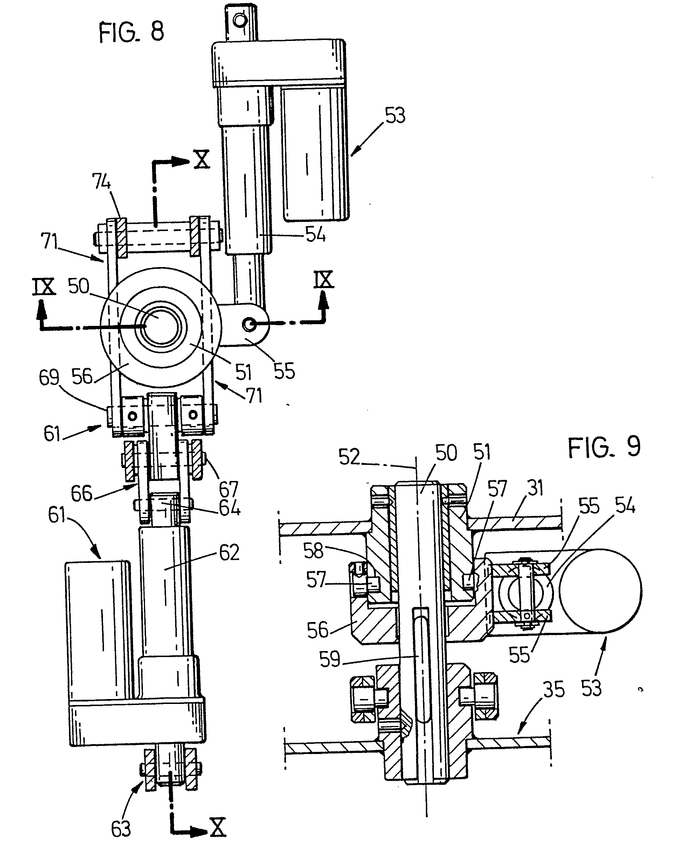

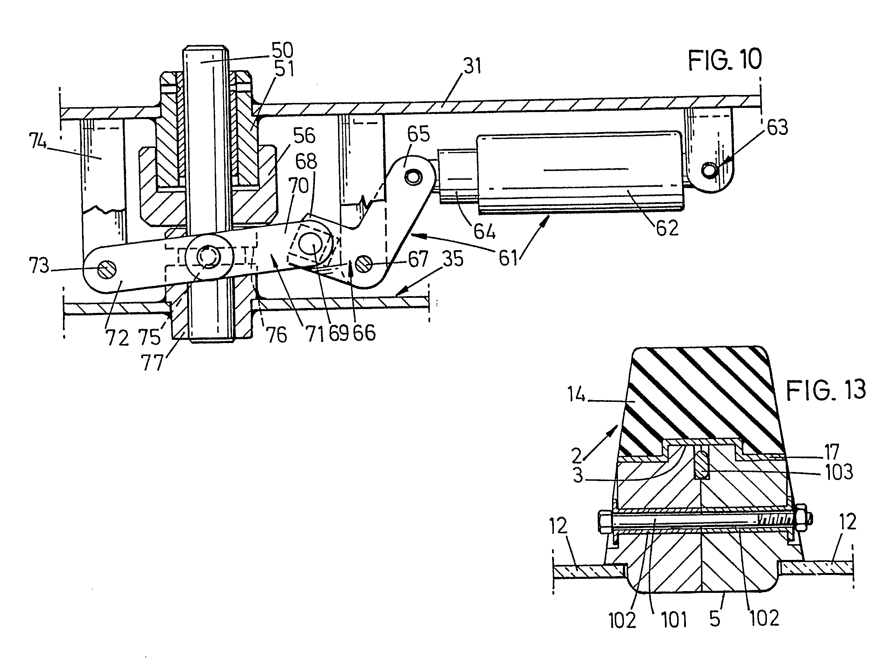

Le châssis 35 est supporté dans le plancher 31 de l'habitacle 7 par l'intermédiaire d'un arbre 50, d'axe perpendiculaire audit plancher, monté dans une buselure 51 fixée au plancher et agencé, d'une part, de manière à pouvoir tourner autour de son axe 52 et, d'autre part, de manière à pouvoir se déplacer suivant une direction parallèle audit axe 52. Des moyens 53 sont associés audit arbre 50 et commandés par les moyens 33, à partir de l'habitacle, pour faire tourner cet arbre 50 afin de modifier la position de la courroie sans fin 41, à l'intérieur du logement 36, par rapport aux éléments 2 de la carcasse et faire varier ainsi la direction de déplacement du véhicule. Dans la forme de réalisation illustrée aux figures 8 à 10, ces moyens 53 comprennent un vérin 54 supporté par le plancher 31 et dont la tige de piston est reliée à deux pattes 55 fixées à une bague 56 supportée par la buselure 51 et coaxiale à cette dernière. Cette bague 56 est montée sur la buselure de manière , d'une part, à ce qu'elle soit immobile, grâce à des ergots 57, suivant une direction parallèle à l'axe 52 de l'arbre 50 et, d'autre part à ce qu'elle puisse tourner, sous l'action du vérin 54 et par rapport à la buselure, autour dudit axe 52, grâce aux ergots 57 coopérant avec des évidements 58 pratiqués dans la buselure. Ladite bague 56 est en outre agencée pour entraîner l'arbre 50 en rotation, autour de son axe, grâce à la clavette 59 rendant la bague 56 et l'arbre 50 solidaires en rotation tout en permettant le mouvement dudit arbre 50 suivant une direction parallèle à son axe 52. A la figure 9, l'arbre 50 est représenté dans la position qu'il occupe lorsque la courroie 41 s'appuie sur les éléments 2, tandis qu'à la figure 10, l'arbre 50 est représenté dans la position qu'il occupe lorsque la courroie est dégagée desdits éléments 2. Le vérin 54 est un vérin électrique commandé par un levier 60 faisant partie des moyens 33 précités. Il est évident que l'entraînement de l'arbre 50 en rotation autour de son axe 52 pourrait être réalisé de toute autre manière et par exemple par un volant logé dans l'habitacle 7.

Des moyens 61 sont associés à l'arbre 50 pour permettre de déplacer celui-ci, parallèlement à son axe 52, afin soit de placer la courroie sans fin 41 en contact avec les faces internes 5 des éléments 2 de la carcasse pour entraîner le véhicule, soit de dégager la courroie 41 de ces faces internes 2 pour rendre les moteurs 37 inopérants lorsque le véhicule doit être arrêté ou pour faciliter la rotation de l'arbre 50 autour de son axe 52 quandon désire faire varier la direction de déplacement du véhicule.

Dans la forme de réalisation illustrée aux figures 8 à 10, ces moyens 61 comprennent un vérin 62 monté, en 63, sur le plancher 31 de l'habitacle. La tige de piston 64 de ce vérin attaque l'extrémité 65 d'un levier coudé 66 articulé sur un arbre 67, dont l'axe s'étend suivant une direction perpendiculaire à l'axe 52 de l'arbre 50, supporté dans un profilé en U fixé au plancher 31. L'autre extrémité 68 du levier coudé 66 est en forme de fourche et attaque une tige 69, parallèle à l'arbre 67, supportée par les extrémités 70 de deux bielles parallèles 71 pivotant, à leurs autres extrémités 72, sur un arbre 73, parallèle à l'arbre 67, supporté par un profilé en U 74 fixé au plancher 31. Ces bielles 71 sont disposées de part et d'autre de l'arbre 50 et présentent chacune un ergot 75 dirigé vers ledit arbre et coopérant avec une rainure périphérique 76 prévue sur une douille 77 calée sur l'arbre 50 et à laquelle est fixée le châssis 35 supportant les moyens moteurs précités. Ces divers élé-

14                **0159052**

ments sont agencés pour que les mouvements de la tige de piston du vérin 62 déplacent l'arbre 50 parallèlement à son axe sur une distance telle que la courroie 41 puisse être appliquée et dégagée des faces internes 5 des éléments 2 de la carcasse. Le vérin 62 est un vérin électrique et est commandé par le levier 60 susdit à partir de l'habitacle 7. Il est évident que tout ce mécanisme pourrait être remplacé par un levier articulé sur le plancher 31 susdit et agencé pour attaquer directement l'arbre 50 pour le déplacer parallèlement à son axe 52.

On pourrait envisager, pour immobiliser temporairement l'habitacle 7 par rapport à la carcasse 1 afin d'entraîner les passagers en révolution avec cette dernière, de mettre les moteurs 37 à l'arrêt tout en maintenant la courroie sans fin 41 appliquée sur les faces internes 5 des éléments 2.

En ce qui concerne le freinage du véhicule, celui-ci peut être effectué grâce aux moteurs freins 37. Toutefois ce freinage peut être renforcé par un frein mécanique 78, esquissé à la figure 6 en traits interrompus, comprenant une garniture de frein 79 articulée, en 80, sur le châssis 35 supportant les moyens moteurs susdits, de manière à pouvoir être appliquée sur le rotor 39 d'un des moteurs 37. La commande de ce frein mécanique 78 peut être assurée, par exemple, par un vérin électrique non représenté commandé à partir du levier 81 constituant les moyens 34 précités et logé dans l'habitacle 7.

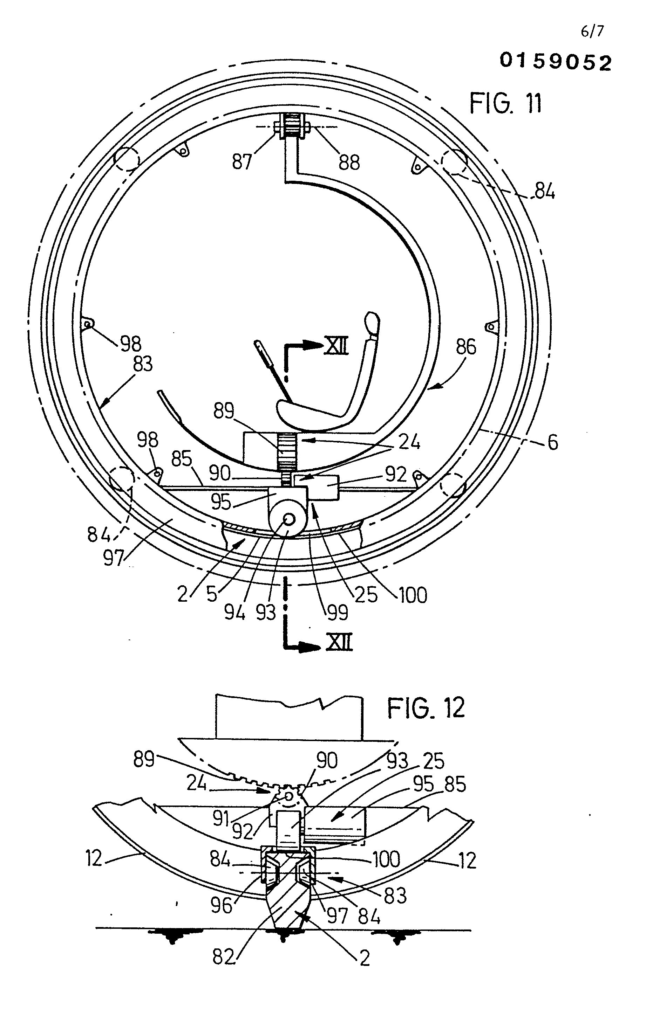

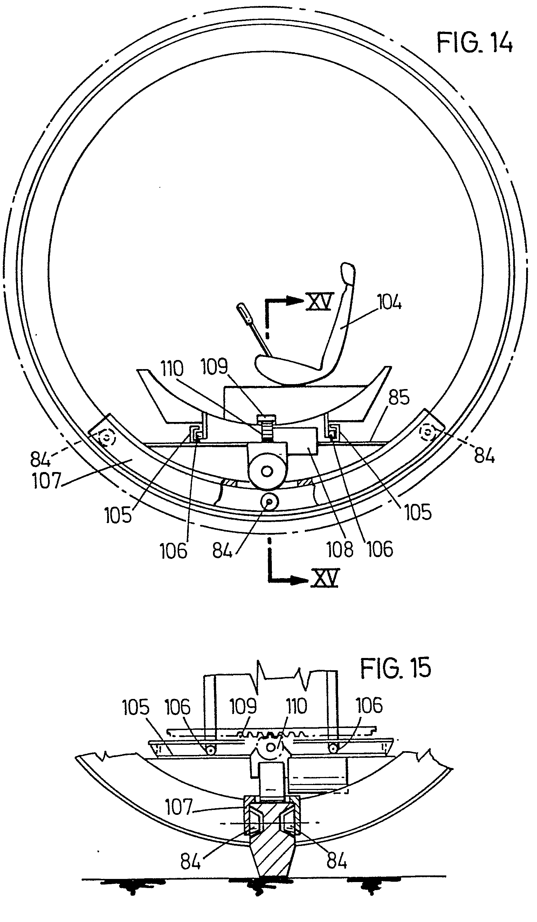

Dans la forme de réalisation du véhicule illustré aux figures 11 et 12, les éléments 2 de la carcasse 1 sont agencés pour que les faces internes 5 de certains de ces éléments 2 constituent un anneau sphérique 82 situé à l'équateur de la sphère de trace 6 susdite et qui est symétrique par rapport audit équateur. L'habitacle 7 de ce véhicule comprend un anneau sphérique 83, coaxial à l'anneau sphérique 82 de la carcasse, guidé sur ce dernier par des galets 84, régulièrement espacés, de manière à pouvoir se déplacer librement par rapport audit anneau 82. Un plancher horizontal 85 est fixé à l'anneau 83 et un siège pendulaire 86, pour un ou plusieurs passagers et qui, dans la version non motorisée du véhicule, est libre par rapport au plancher 85, est suspendu à l'anneau 83, à l'opposé du plancher 85 et au-dessus de celui-ci, par l'intermédiaire d'un arbre 87 qui a son axe 88 parallèle au plancher 85 et situé dans le plan comprenant l'équateur de l'anneau sphérique 83.

Les moyens précités permettant de modifier la direction du déplacement du véhicule comprennent un secteur denté 89 fixé au siège 86 et coaxial à l'arbre 87, un pignon denté 90 engrenant avec ce secteur denté 89 et calé sur l'arbre 91 d'un moteur 92, tel que moteur électrique pouvant tourner dans les deux sens, fixé au plancher 85 de manière à ce que son arbre 91 soit parallèle à l'arbre 87. Lorsque le passager désire changer de direction, il actionne, à l'aide d'un levier de sélection, le moteur 92 dans le sens désiré, ce qui a pour effet, grâce aux secteur et pignon dentés 89 et 90, de faire pivoter le siège 86 et le passager autour de l'axe 87 et de déplacer le centre de gravité de l'habitacle dans la carcasse. Ce déplacement fait basculer la carcasse 1 qui, au lieu de rouler suivant un équateur, roule suivant un parallèle, ce qui provoque une décélération du véhicule et un virage de celui-ci qui sont fonction de valeur du déplacement commandé du siège, par rapport à la verticale.

Tel quel, c'est-à-dire non motorisé, ledit véhicule peut se déplacer, par gravité, et être piloté librement sur une surface en pente.

Les moyens moteurs 25 prévus pour entraîner ce type de véhicule comprennent un galet 93, éventuellement denté, situé en dessous du plancher 85 et calé sur l'arbre 94 d'un moteur électrique 95 fixé au plancher 85 pour que l'axe de cet arbre 94 s'étende suivant une direction perpendiculaire à l'axe 88 de l'arbre 87 auquel est suspendu le siège pendulaire 86. L'axe de l'arbre 94 est avantageusement situé dans un plan vertical passant par le centre de l'anneau sphérique 83 et coupant perpendiculairement l'arbre 88. L'anneau sphérique 83 est formé par deux éléments circulaires profilés 96 et 97, supportant les galets 84 coopérant avec les faces latérales de l'anneau sphérique 82 de la carcasse 1, réunis entre eux par des boulons 98 régulièrement espacés. En regard du galet 93, ces éléments 96 et 97 présentent un évidement 99 permettant audit galet de prendre appui sur la face interne 100 de l'anneau sphérique 82, qui est dentée lorsque le galet 93 est denté, afin d'assurer l'entraînement de la carcasse. Le moteur électrique est avantageusement choisi pour tourner dans les deux sens de sorte qu'il soit possible d'inverser le sens de marche du véhicule en inversant le sens de marche du moteur. Ce moteur sera également avantageusement un moteur frein permettant de réduire la vitesse du véhicule et de provoquer l'arrêt de celui-ci, le frein moteur pouvant être assisté d'un frein mécanique commandé à partir de l'habitacle. Enfin, en prévoyant un système de blocage de l'arbre 94 du moteur 95, il sera possible d'immobiliser l'habitacle 7 par rapport à la carcasse 1 pour que le siège pendulaire 86 accompagne ladite carcasse dans ses révolutions.

Dans le cas où la carcasse 1 du véhicule est étanche, au moins une ouverture d'aération, non représentée, est prévue dans un des panneaux 12 précités, un clapet de fermeture étanche de cette ouverture étant monté sur la face interne du panneau 12 de manière à pouvoir être actionné manuellement de l'intérieur du véhicule. Au cas où ce dernier devrait être immergé, un dispositif de fermeture du clapet par télécommande serait prévu, pour doubler la commande manuelle, et bloquerait le clapet en position de fermeture pendant toute la durée de l'immersion.

Il doit être entendu que l'invention n'est nullement limitée aux formes de réalisation décrites et que bien des modifications peuvent être apportées à ces dernières sans sortir du cadre du présent brevet.

C'est ainsi que l'on pourrait, comme montré à la figure 13, réaliser, en particulier pour le véhicule illustré aux figures 11 et 12, la carcasse 1 en deux parties hémisphériques. Ces deux hémisphères étant réunis entre eux, à intervalles réguliers, par des boulons 101 logés dans des gaines métalliques 102 noyées dans les éléments 2 concernés, un joint d'étanchéité 103 étant avantageusement prévu entre ces deux hémisphères.

On pourrait également, comme montré aux figures 14 et 15, remplacer le siège pendulaire 86 susdit par un siège 104 supporté par le plancher 85 et mobile par rapport à ce dernier, grâce à des guides parallèles 105 et des galets 106, suivant une direction sensiblement perpendiculaire au plan passant par l'équateur de l'anneau sphérique 82. Dans ce cas, le plancher 85 est supporté par un segment d'anneau 107 coaxial à l'anneau 82. Les déplacements du siège pour modifier la direction de déplacement du véhicule sont provoqués par un moteur électrique 108 tournant dans les deux sens et entraînant une crémaillère 109, fixée au siège, par l'intermédiaire d'une roue dentée 110, les moyens moteurs de cette dernière version étant identiques à ceux du véhicule à siège pendulaire.

REVENDICATIONS

1. Véhicule sphérique de transport, en particulier véhicule pour le transport de personnes dans des parcs d'attractions, caractérisé en ce qu'il comprend une carcasse (1) rigide et indéformable régulièrement ajourée, dont les éléments (2) ont leurs faces externes (3), destinées à constituer la surface de roulement du véhicule, qui sont situées à la surface d'une première sphère tandis que les faces internes (5) de ces éléments (2) sont situées à la surface d'une seconde sphère, elle-même comprise dans la première, un habitacle (7), sensiblement en forme de segment sphérique, prévu pour supporter une charge telle qu'au moins un passager, concentrique à la seconde sphère susdite, cet habitacle (7) ayant son centre de gravité décalé par rapport aux centres des sphères susdites et présentant des moyens (8) agencés pour prendre appui sur une partie des faces internes (5) des éléments (2) de la carcasse (1) afin que ledit habitacle (7) soit guidé par ces faces internes (5) et se déplace librement par rapport à la carcasse (1) lorsque celle-ci tourne autour du centre de la première sphère précitée et des moyens (9) présentés par la carcasse et agencés pour permettre d'accéder à l'intérieur de cette dernière et à l'habitacle (7), les évidements égaux (10) subsistant entre les éléments (2) de la carcasse (1) étant des prismes dont les bases ont la forme de triangles sphériques isocèles, les éléments (2) étant disposés pour que ces évidements (10) soient groupés par séries de cinq et pour que, dans chaque série, les bases triangulaires des évidements soient opposées par leurs sommets pour être comprises dans un pentagone sphérique régulier.

2. Véhicule suivant la revendication 1, caractérisé en ce que les première et seconde sphères précitées sont concentriques.

3. Véhicule suivant l'une ou l'autre des revendications 1 et 2, caractérisé en ce que chacun des évidements (10) susdits est obturé par un panneau (12) réalisé en un matériau transparent, les panneaux étant réunis, le long de leurs bords, aux éléments (2) de la carcasse (1) de manière à être situés à l'intérieur d'un volume compris entre les surfaces des première et seconde sphères précitées.

4. Véhicule suivant la revendication 3, caractérisé en ce que les panneaux (12) susdits sont profilés suivant une troisième sphère concentrique à la première sphère précitée.

5. Véhicule suivant l'une quelconque des revendications 1 à 4, caractérisé en ce que les faces externes (3) des éléments (2) de la carcasse (1) sont garnies, sur au moins une partie de leur largeur, d'une couche de matériau formant bandage (14) de roulement du véhicule et qui est capable de se déformer sous le poids de ce dernier.

6. Véhicule suivant la revendication 5, caractérisé en ce que le matériau constituant la couche susdite est choisi pour que sa déformation, sous le poids du véhicule, soit sensiblement égale à la flèche (18) du segment sphérique constitué par chacun des triangles sphériques formant les bases des prismes susdits et qui sont situés sur la première sphère précitée.

7. Véhicule suivant l'une quelconque des revendications 1 à 6, caractérisé en ce que les moyens (9) susdits présentés par la carcasse pour permettre

**0159052**

l'accès à l'habitacle (7) sont constitués par une porte (19) pratiquée dans ladite carcasse (1), le dormant de cette porte étant formé par une partie externe (20) d'éléments (2) de carcasse disposés suivant un polygone convexe, l'ouvrant de la porte étant formé par l'autre partie interne (21) de ces éléments (2), au moins une charnière (22) réunissant l'ouvrant au dormant le long d'un des côtés du polygone, des moyens de fermeture, de préférence à points d'ancrage multiples, étant prévus pour immobiliser la porte en position fermée.

8. Véhicule suivant l'une quelconque des revendications 1 à 7, caractérisé en ce qu'il comprend des moyens disposés sur l'habitacle (7) et agencés pour être commandés soit à partir de ce dernier, soit par télécommande, pour pouvoir prendre appui sur la face interne (5) d'au moins un des éléments (2) de la carcasse afin d'immobiliser temporairement l'habitacle (7) par rapport à celle-ci.

9. Véhicule suivant l'une quelconque des revendications 1 à 8, caractérisé en ce qu'il comprend, agencés sur l'habitacle (7), des moyens (24) destinés à modifier la direction de déplacement du véhicule.

10. Véhicule suivant l'une quelconque des revendications 1 à 9, caractérisé en ce qu'il comprend des moyens moteurs (25) agencés sur l'habitacle (7) et destinés à coopérer avec les faces internes (5) des éléments (2) de la carcasse (1) pour entraîner cette dernière en rotation autour du centre de la première sphère précitée, le poids de l'habitacle (7) sous charge, le poids de la carcasse (1) et la puissance desdits moyens moteurs (25) étant choisis pour qu'un couple moteur puisse être créé pour entraîner la carcasse (1) en rotation à la manière d'une tournette (cage tournante pour écureuil).

11. Véhicule suivant la revendication 10, caractérisé en ce que les moyens (24) susdits destinés à modifier la direction de déplacement du véhicule sont également agencés pour permettre l'inversion du sens de déplacement dudit véhicule.

12. Véhicule suivant l'une quelconque des revendications 1 à 11, caractérisé en ce qu'il comprend des moyens de freinage (26) associés à l'habitacle (7) et agencés pour pouvoir réduire la vitesse de la carcasse (1) du véhicule.

13. Véhicule suivant l'une quelconque des revendications 1 à 12, caractérisé en ce que l'habitacle (7) a une hauteur sensiblement égale au rayon de la seconde sphère précitée et est ajouré pour permettre une bonne visibilité au passager, les moyens (8) susdits agencés sur l'habitacle (7) pour prendre appui sur les faces internes (5) des éléments (2) de la carcasse (1) étant constitués par des anneaux ou segments d'anneaux sphériques horizontaux (29) régulièrement espacés les uns des autres à la surface extérieure (30) de l'habitacle et prenant appui sur les faces internes (5) d'un nombre important d'éléments (2) de la carcasse, ces anneaux ou segments d'anneaux (29) étant réalisés en un matériau à faible coefficient de frottement.

14. Véhicule suivant la revendication 13, caractérisé en ce que l'habitacle (7) comprend, à sa base, un plancher horizontal (31) sur lequel reposent le siège (28) du passager, la source d'alimentation (32) des moyens moteurs (25) du véhicule ainsi que les moyens (33) permettant de diriger ce dernier et en dessous duquel sont agencés, afin d'être supportés par le plancher (31), les moyens moteurs (25) précités destinés à coopérer avec les faces internes (5) des éléments (2) de la carcasse (1) pour entraîner le véhicule.

15. Véhicule suivant la revendication 14, caractérisé en ce que les moyens moteurs (25) sont supportés par un châssis (35) parallèle au plancher (31) susdit et agencé en dessous de ce dernier dans un logement (36) prévu dans l'habitacle (7), ces moyens moteurs (25) comprenant au moins un moteur (37), une courroie sans fin (41) entraînée par celui-ci et guidée et tendue par des poulies de renvoi et de tension (42,43) dont les axes sont parallèles à l'arbre du moteur et une plaque de guidage (44), fixe par rapport au châssis (35), sur laquelle passe la courroie (41) et qui est profilée pour être concentrique à la seconde sphère susdite, le moteur (37), la courroie sans fin (41) et la plaque de guidage (44) étant agencés pour qu'une zone (45) de la courroie (41) prenne appui sur les faces internes (5) d'au moins deux éléments (2) de la carcasse (1) et pour que cette zone (45) soit maintenue en contact avec lesdites faces internes (51) par la plaque de guidage (44), la face (46) de la courroie (41) en contact avec les faces internes (5) susdites étant réalisée en un matériau à haut coefficient de frottement.

16. Véhicule suivant la revendication 15, caractérisé en ce que le châssis (35) susdit est supporté dans le plancher (31) de l'habitacle par l'intermédiaire d'un arbre (50) d'axe perpendiculaire audit plancher et agencé dans ce dernier, d'une part, de manière à pouvoir tourner autour de son axe (52) et, d'autre part, de manière à pouvoir se déplacer suivant ledit axe, des moyens (53), tels qu'un volant logé dans l'habitacle, étant associés audit arbre (50) pour le faire tourner autour de son axe afin de modifier la position de la courroie (41), à l'intérieur du logement (36) susdit, par rapport aux éléments (2) de la carcasse et faire varier la direction de déplacement du véhicule, des moyens (61), tels qu'un levier associé au plancher, étant prévus pour coopérer avec l'arbre (50) pour déplacer ce dernier, suivant son axe, afin soit de placer la courroie sans fin (41) en contact avec les faces internes (5) des éléments (2) de carcasse pour entraîner le véhicule, soit de dégager ladite courroie (41) de ces faces internes pour rendre le moteur (37) inopérant lorsque le véhicule doit être arrêté ou pour faciliter la rotation de l'arbre (50) autour de son axe (52) lors d'un changement de direction du véhicule.

17. Véhicule suivant l'une ou l'autre des revendications 15 et 16, caractérisé en ce que le moteur (37) susdit est un moteur électrique alimenté par des batteries (38) supportées par le plancher (31), ce moteur étant un moteur frein, à courant continu, dont le rotor (39) tourne autour du stator, ce rotor présentant un bandage (40) et la courroie sans fin (41) précitée faisant une boucle autour de ce bandage pour être entraînée par celui-ci.

18. Véhicule suivant la revendication 17, caractérisé en ce que les moyens de freinage (26) précités sont constitués par le moteur frein susdit et par un frein mécanique (78) présentant une garniture de frein (79) articulée, commandée à partir de l'habitacle, de manière à pouvoir être appliquée sur le rotor (39) du moteur (37) lorsque le véhicule doit être ralenti ou arrêté.

25 0159052

19. Véhicule suivant l'une quelconque des revendications 1 à 12, caractérisé en ce que les éléments (2) de la carcasse sont disposés pour que les faces internes (5) de certains de ces éléments constituent un anneau sphérique (82) situé à l'équateur de la seconde sphère susdite et symétrique par rapport à cet équateur, l'habitacle (7) comprenant un anneau sphérique (83), coaxial à l'anneau sphérique (82) de la carcasse, agencé pour être guidé par ce dernier et pour se déplacer librement par rapport à celui-ci, ledit habitacle comprenant également un plancher (85) fixé audit anneau sphérique (83) et un siège pendulaire (86), pour le passager, qui est libre par rapport au plancher et qui est suspendu sur l'anneau sphérique (83) de l'habitacle, à l'opposé du plancher et au-dessus de celui-ci, par l'intermédiaire d'un arbre (87) dont l'axe (88) est parallèle au plancher et situé dans le plan comprenant l'équateur de ce dernier anneau sphérique (83).

20. Véhicule suivant la revendication 19, caractérisé en ce que les moyens (24) destinés à modifier la direction de déplacement du véhicule comprennent un secteur denté (89) fixé au siège (86) susdit et coaxial à l'arbre (87) précité auquel est suspendu le siège, un pignon denté (90) engrenant avec ce secteur denté et calé sur un arbre (91) monté dans des paliers fixés au plancher (85) et des moyens (25), tels que moteur électrique (92), supportés par ledit plancher et agencés pour entraîner l'arbre (91) portant le pignon denté (90) en rotation autour de son axe, dans les deux sens.

21. Véhicule suivant l'une quelconque des revendications 1 à 12, caractérisé en ce que les éléments (2) de la carcasse sont disposés pour que les faces internes (5) de certains de ces éléments constituent un anneau sphérique situé à l'équateur de la seconde sphère susdite et symétrique par rapport à cet équateur, l'habitacle comprenant un segment d'anneau sphérique (107), coaxial à l'anneau sphérique de la carcasse, agencé pour être guidé par ce dernier et pour se déplacer librement par rapport à celui-ci, ledit habitacle comprenant également un plancher (85) fixé audit segment d' anneau sphérique (107) et un siège (104), pour le passager, monté sur le plancher de manière à pouvoir se déplacer, suivant une direction sensiblement perpendiculaire au plan passant par l'équateur susdit, de part et d'autre de ce plan.

22. Véhicule suivant la revendication 21, caractérisé en ce que les moyens destinés à modifier la direction de déplacement du véhicule comprennent une crémaillère (109) fixée au siège (104) parallèlement au plancher (85) et perpendiculairement au plan passant par l'équateur, un pignon denté (110) engrenant avec cette crémaillère (109) et calé sur un arbre monté dans des paliers fixés au plancher et des moyens, tels que moteur électrique, supportés par ledit plancher et agencés pour entraîner l'arbre portant le pignon denté (110) en rotation autour de son axe, dans les deux sens.

23. Véhicule suivant l'une quelconque des revendications 19 à 22, caractérisé en ce que les moyens moteurs précités comprennent un galet (93), éventuellement denté, situé en dessous du plancher (85) et calé sur un arbre (94) supporté par des paliers fixés au plancher pour que son axe s'étende suivant une direction perpendiculaire au plan passant par l'équateur, ce galet (93) étant agencé pour prendre appui sur la face interne (5) de l'anneau sphérique (82) de la carcasse, cette face étant éventuellement dentée, des moyens (25), tels que moteur électrique (95) fixé au plancher, étant prévus pour entraîner l'arbre portant le galet (93) en rotation autour de son axe, dans les deux sens.

24. Véhicule suivant la revendication 23, caractérisé en ce que les moyens de freinage précités sont constitués par le moteur d'entraînement de l'arbre portant le galet (93) précité et qui est un moteur frein à courant continu, un frein mécanique étant également prévu et présentant une garniture de frein articulée, commandée à partir du siège, destinée à être appliquée sur l'arbre du moteur lorsque le véhicule doit être ralenti ou arrêté.

25. Véhicule suivant l'une quelconque des revendications 3 à 24, caractérisé en ce que la carcasse est étanche, au moins une ouverture d'aération étant prévue dans un des panneaux réunissant les éléments de la carcasse et des moyens étant agencés pour obturer hermétiquement cette ouverture.

FIG. 1

FIG. 2

FIG. 3

FIG. 4

0159052

FIG. 5

FIG. 6

FIG. 7

FIG. 8

FIG. 9

FIG. 10

50
51
31
74
56
65
63
68
70
64
62
61
73
67 35
72 75 76 71 69 66
77

FIG. 13

14
2
3
17
103
12
12
102 101 5 102

0159052

5/7

6/7

0159052

FIG. 11

FIG. 12

0159052

FIG. 14

FIG. 15